# EUROPEAN PATENT APPLICATION

(11) **EP 3 816 323 A1**
(43) Date of publication of application: **05.05.2021**
(21) Application number: 19814192.1
(22) Date of filing: 26.03.2019
(51) Int. Cl.: C25C 3/08

(54) **CATHODE DEVICE FOR AN ALUMINUM ELECTROLYTIC CELL**

(30) Priority: 07.06.2018 RU 2018121209
(71) Applicant: Obshchestvo S Ogranichennoy Otvetstvennost'yu "Obedinennaya Kompaniya Rusal Inzhenerno-Tekhnologicheskiy Tsentr", G. Krasnoyarsk 660111 (RU)
(72) Inventor: PROSHKIN, Aleksandr Vladimirovich, Krasnoyarsk, 660111 (RU); POGODAEV, Aleksandr Mikhajlovich, Krasnoyarsk, 660111 (RU); NAGIBIN, Gennadij Efimovich, Krasnoyarsk, 660111 (RU); ZHERDEV, Aleksej Sergeevich, Krasnoyarsk, 660111 (RU); PINGIN, Vitalij Valer'evich, Krasnoyarsk, 660111 (RU); SBITNEV, Andrej Gennad'evich, Krasnoyarsk, 660111 (RU); ORLOV, Anton Sergeevich, Krasnoyarsk, 660111 (RU)
(74) Representative: Tobiasz-Dumania, Katarzyna
(86) International application number: PCT/RU2019/050034
(87) International publication number: WO 2019/235971

(57) **Abstract**

The invention relates to the design of a cathode device for an electrolytic cell for producing aluminum by electrolysis. The present cathode device comprises a metal shell lined with side blocks mounted onto a rim, carbon-graphite bottom blocks having conductive rods, a base made of a thermal insulation layer and a refractory layer that is made of a mixture of 23-26 wt% porcellanite, 43-46 wt% quartzites, and 28-32 wt% spent mullite bricks from anode baking furnaces, said refractory layer being compressed to an apparent density of no less than 2100 kg/m³. The invention increases the service life of an electrolytic cell, decreases fluoride salt consumption and broadens feedstock options by means of reusing waste products from aluminum factories and using natural materials, and slows the penetration of aggressive electrolysis components into the refractory layer.

## Description

### The Field of the Invention

The invention lies in the field of non-ferrous metals industry, namely, in electrolytic smelting of aluminium inside a cathode assembly of an aluminium reduction cell.

### Prior Art

The known technology is a traditional cathode assembly of a reduction cell that comprises a metal shell lined with side carbon graphite or silicon carbide blocks, bottom carbon graphite blocks with current conducting bars, joints between the blocks, a heat insulating layer and a refractory (barrier) layer made of refractory firebricks with 25-30% of aluminium oxide, and 60-68% of silicon oxide, and the density of at least 2,100 kg/m³ (M. Sorlie, H. Oye. Cathodes in aluminium electrolysis. -Krasnoyarsk: Verso, 2013).

The disadvantage of the assembly with the firebrick barrier layer is the joints between the bricks, through which the aggressive components of electrolysis spread to deeper cathode layers. It results in increased fluoride consumption, reduced life of barrier materials and of the reduction cell in general. In the production of firebricks the clay raw material is fired twice, first at the stage of non-shape fired material production and then at the stage of brick production from such material, so the energy consumption is significant, just as the brick price.

The known technology is a cathode assembly of a reduction cell for aluminium smelting (patent RU 2270891, C25C3/08, disclosed on February 27, 2006) comprising a metal shell lined with side carbon graphite blocks sitting on the side edge, bottom carbon graphite blocks with current conducting bars, joints between the blocks, a heat insulating layer and a refractory layer made of loose silica-containing material - dust waste from cyclone air separators in electrothermal silicon production.

The disadvantage of such cathode assembly is the low resistance of the barrier material, containing mostly SiO₂ to both aluminium and fluorides. In particular, when aluminium penetrates the barrier material the following exothermic reaction occurs:

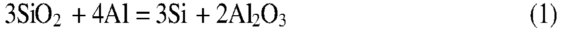

Because of the interaction with cryolite the silicon in the mixture gets depleted due to a gas-phase reaction evidenced by a negative change of the standard Gibbs energy in the reaction (2):

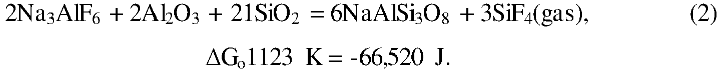

Reaction (1) causes silicon drag-out from the refractory material in the form of gaseous silicon tetrafluoride, which results in pot lining disintegration and reduced life of the refractories and the reduction cells in general.

A technology that is the closest to the claimed cathode assembly in terms of its technical essence and the achievable result is the lining of the cathode assembly of an aluminium reduction cell (patent RU 2608942, C25C3/08, disclosed on January 26, 2017) comprising bottom and side blocks with cold ramming paste in between them, a refractory and a heat insulating layers from non-shape materials, whereas the refractory layer consists of an aluminosilicate material, and the heat insulating layer - of nongraphitised carbon or its mixture with aluminosilicate or alumina powders. The heat insulating and the refractory layers comprise at least two sub-layers, and the porosity of the heat insulating and refractory layers grows from the upper sub-layer down, and the ratio between the thicknesses of the refractory and the heat insulating layers is 1:(1-3). The technology also provides for the use of a naturally occurring material, for instance porcellanite, for one of the refractory sub-layers.

The disadvantage to this cathode assembly is its low resistance of the refractory sub-layer to fluorides, which reduces the life of the refractories and the reduction cell in general.

### Disclosure of the Invention

The invention focuses on the fundamental objective of increasing the life of the aluminium reduction cell, reducing the consumption of fluorides, and expanding the sources of raw materials by reclaiming the aluminium smelting waste and by using naturally occurring materials.

The technical result is the accomplishment of the objective above, as well as the reduced rate of penetration of aggressive components of electrolysis into the refractory (barrier) layer.

The required objective can be accomplished and the technical result can be achieved with the proposed cathode assembly for an aluminium reduction cell comprising a metal shell lined with side blocks sitting on side edges, bottom carbon graphite blocks with current conducting bars, and a cathode base of at least one heat insulating and refractory layers made of loose materials. At least one refractory layer is made of the following blend: porcellanite, preferably 23-26 wt%, quartzites, preferably 43-46 wt%, and spent mullite bricks from anode baking furnaces, preferably 28-32 wt%, as compacted to at least 2,100 kg/m³ apparent density. It is also suggested that a refractory layer of the cathode assembly of the aluminium reduction cell should be made of a loose material, specifically a blend of the following key components: porcellanite, quartzites, and spent mullite bricks from anode baking furnaces, and should be compacted to at least 2,100 kg/m³ apparent density.

The suggested cathode assembly of the aluminium reduction cell has particular distinguishing features.

Porcellanite (burnt clay) has the following particle size distribution (mm), by mass (wt%).

| | | | |
|---|---|---|---|
| -5/+3 | -3/+2 | -2/+0.5 | -0.5 |
| 3.57 | 1.38 | 21.22 | 73.83 |

Quartzites have the following particle size distribution (mm), by mass (wt%).

| | | | |
|---|---|---|---|
| -5/+3 | -3/+2 | -2/+0.5 | -0.5 |
| 36.33 | 8.74 | 48.92 | 6.01 |

Milled spent mullite bricks from anode baking furnaces have the following particle size distribution (mm), my mass (wt%).

| | | | |
|---|---|---|---|
| -5/+3 | -3/+2 | -2/+0.5 | -0.5 |
| 16.07 | 3.99 | 24.75 | 55.19 |

### Embodiment

The property that distinguishes the proposed technical solution is the use of a jointless refractory layer made of the blend of naturally occurring materials and the waste sourced from aluminium smelters.

It is suggested that the key components used for the blend should be porcellanite (burnt clay) - burnt rocks turned, after having been exposed to subsurface fires in coalbeds, into porcelain-like materials, and natural quartzite, and spent mullite bricks.

The authors of the proposed invention have surprisingly made the choice of the blend components after having conducted multiple experiments to test combinations of various materials in order to accomplish the required objective.

The major advantage of porcellanite derives from the fact that the material underwent high temperature treatment in natural environment, which supports its low cost. The disadvantage of the material is its high level of closed porosity (up to 14%) deriving from the escape of hydroxyl group (OH) from the kaolin space lattice. For this reason, it's been impossible to compact it to a level greater than 1,700 kg/m³, as a result of which a volumetric unit of the porcellanite refractory layer contains 15% less material than the conventional technology. Another disadvantage of porcellanite is the insufficient content of aluminium oxides necessary for the formation of viscous glasslike albite. It all weakens its refractory (barrier) material properties, so one of the ways to use porcellanite for the purpose in consideration is its unobvious, but extremely efficient combination with quartzite and an alumina-rich material - spent mullite bricks.

The practicability of adding quartzites to the barrier material blend is related to the phase transition at the temperature of 572.6 °C that occurs together with the expansion of the volume, which supports the growth of the barrier blend density and the slowdown of penetration of aggressive components of electrolysis into the refractory layer.

The chemical composition of the refractory layer made of porcellanite, quartzites, and spent mullite bricks is chosen so that it would match, as close as possible, the composition of currently used firebricks. That is why the amount of the spent mullite bricks should be sufficient to ensure the required level of aluminium oxides (25-30%).

It is suggested that coarse grains of mullite bricks should be mostly used for the barrier material blend, a heterogeneous mixture with multiple particle sizes, to form a hard structural frame. Finer particles of porcellanite together with quartzite will fill in the gaps, which makes it possible to achieve sufficient density (at least 2,000 kg/m³ in a lab and 2,100 kg/m³ in industrial conditions) and to slow down the rate at which the aggressive components of electrolysis penetrate the refractory layer.

Porcellanite has the following particle size distribution (mm), by mass (wt%):

| | | | |
|---|---|---|---|
| -5/+3 | -3/+2 | -2/+0.5 | -0.5 |
| 3.57 | 1.38 | 21.22 | 73.83 |

Quartzites have the following particle size distribution (mm), by mass (wt%):

| | | | |
|---|---|---|---|
| -5/+3 | -3/+2 | -2/+0.5 | -0.5 |
| 36.33 | 8.74 | 48.92 | 6.01 |

Spent mullite bricks have the following particle size distribution (mm), by mass (wt%):

| | | | |
|---|---|---|---|
| -5/+3 | -3/+2 | -2/+0.5 | -0.5 |
| 16.07 | 3.99 | 24.75 | 55.19 |

Therefore, the refractory layer represents powders of the chosen -5 mm particle sizes from the above materials.

The choice of the upper limit of the range (-5 mm) takes into account the existence of the counter factors influencing the achievability of the technical result, i.e. the slowdown of the rate at which the aggressive components of electrolysis penetrate the refractory (barrier) layer, which can be achieved through the highest possible density of the material. Narrowing the range of the particles helps improve the homogenising, but reduces the packing density, while widening the same range helps increase the packing density, but at the same time there is an increasing risk of segregation by sizes and a need to ensure thorough stirring of the blend, which drives up the energy costs associated with the blend preparation. The proposed values appear to be the optimum and based on empirical knowledge.

As compared to the prototype, the proposed design of the cathode assembly allows to slow down the penetration of aggressive components of electrolysis into the refractory layer. The selected composition of the refractory blend is considered the most optimum. If the blend doesn't contain porcellanites, the objective of increased cell life, reduced fluoride consumption and expansion of the raw material sources by adding naturally occurring materials thereto won't be reached. If the blend doesn't contain coarse particles of spent mullite bricks, the structural frame will be broken and the dense compaction of the barrier layer won't be achieved, and the resistance of the blend to molten aluminium will reduce. If the blend doesn't contain quartzites, then again the high packing density won't be achieved, since it is the quartzites that have α-SiO₂ to β-SiO₂ phase transition at 572.6°C temperature, which is accompanied by the expansion of the volume and the growth of barrier material density. In addition to that, vaporous sodium and bath penetrating the material along the edges of the particles won't interact with mullite and porcellanite as effectively as they will with quartzite, with the generation of a stable bond of sodium disilicate and monosilicate (Na₂O·2SiO₂, Na₂O·SiO₂), which solidify the refractory layer and reduce the penetration of aggressive components of electrolysis into the refractory layer.

If the porcellanite content is higher than the reported level (26 wt%), the packing density will suffer; if it is less than the reported level (23 wt%), then the consumption of the inexpensive naturally occurring material will reduce.

If the quartzite content is higher than the reported level (46 wt%), then the packing density will suffer; if it less than the reported level (43 wt%), then the effect of the volumetric expansion and self-packing of the blend will be weaker, resulting in increased penetration of aggressive components of electrolysis into the refractory layer.

If the amount of the milled spent mullite bricks from anode baking furnaces is higher that the reported (32 wt%), then the packing density will suffer, the sufficient amount of the viscous melt (albite) will not be produced, and, as a result, the penetration of aggressive components of electrolysis into the refractory layer will be growing. If the amount if the milled spent mullite bricks from anode baking furnaces is less than the reported (28 wt%), then the packing density will also suffer, just as the optimum chemical composition of the blend.

The statements above have been confirmed by laboratory tests conducted to study the penetration of aggressive components of electrolysis into the refractory layers for different blend formulas with the proposed materials.

The following components were used for blending:
- porcellanite (Tulyak deposit, Uyarsky district, Krasnoyarsk region);
- quartzite or quartz-kaolin (Kmapanovskoye deposit, Uyarsky district, Krasnoyarsk region);
- spent MLS-62 mullite bricks from flue walls of anode baking furnaces (hereinafter MLS bricks).

The tests were made to check the penetration of aggressive components of electrolysis into the refractory layers and involved the evaluation of the depth to which the fluorides penetrated the refractory bricks placed in a graphite crucible, in a furnace, for 24 hours, at the reduction process temperatures (∼ 950°C), and in direct contact with fluorides, aluminium, and sodium. The tests were carried out for six different samples with different chemical composition. Table 1 shows the results of the cryolite resistance testing.

**Table 1**

| # | Content, wt% | Density, ρ_{pack}, kg/m³ | Reaction zone height, H_{react}, mm | Impregnation depth, mm | Notes |
|---|---|---|---|---|---|
| 1 | 50 porcellanite 50 MLS bricks | 1.69 | 1.5 | 11.0 | Black colour. The sample caked together with the crucible, residual height of the sample is uniform. |
| 2 | 70 porcellanite 30 MLS bricks | 1.68 | 3.0 | 22.0 | Grey colour. Impregnation along the periphery, crumbling of the bottom part of the sample, leak in the central part. |
| 3 | 25 porcellanite 45 quartzite 30 MLS bricks | 2.06 | 1.0 | 7.6 | Grey colour. The residual height of the sample is uniform. |
| 4 | 25 porcellanite 50 quartzite 25 MLS bricks | 2.08 | 3.0 | 6.3 | Colour unchanged. The residual height of the sample is varying (smaller in the centre). |
| 5 | 16 porcellanite 54 quartzite 30 MLS bricks | 2.06 | 1.5 | 4.1 | Grey colour. The reaction zone is homogeneous, the residual height of the sample is uniform. |
| 6 | 25 porcellanite 45 quartzite 30 MLS bricks | 2.07 | 1.5 | 2.5 | Grey colour. The reaction zone is homogeneous, the residual height of the sample is uniform. |

The data above shows that blend #6 has the minimum depth of penetration of aggressive components of electrolysis into the refractory layer.

The optimum blend formula for the refractory layer is, wt%: porcellanite - 25, quartzites - 45, spent mullite bricks - 30.

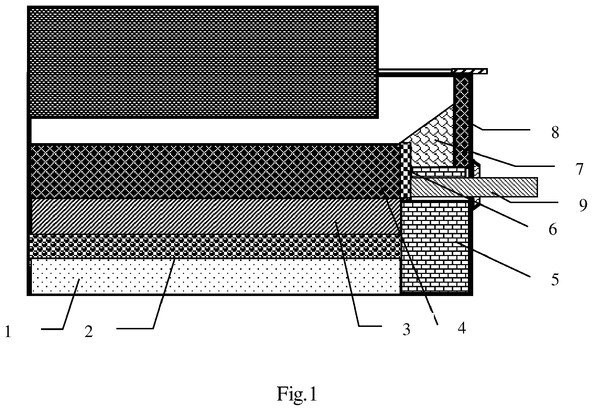

The essence of the invention is further explained with the visual material, where Figure 1 demonstrates the cathode assembly of the reduction cell comprising a heat insulating nongraphitised carbon layer #1 of up to 90% porosity, topped by a heat insulating layer #2 of up to 60% porosity, topped by the refractory layer #3 made out of a blend of porcellanite, quartzites, and spent mullite bricks, that has up to 17% porosity and high resistance to penetration of bath components leaking through the cathode bottom consisting of carbon graphite blocks #4. There is a brick edge laid along the inside perimeter of the metal shell sidewalls #5. Ramming paste #6 fills in gaps between the bottom carbon graphite blocks #4 and the insert block #7 adjoining the side blocks #8. Current conducting bar #9 is connected to the bottom carbon graphite block #4.

Using the cathode assembly above will enable longer reduction cell life, reduced consumption of fluorides and expansion of the raw material sources by reclaiming the waste sourced from aluminium smelters and by using naturally occurring materials.

The nonobviousness of the solution is explained by particular usage of porcellanites (burnt clay), which, due to the natural thermal treatment they underwent, have competitive properties compared to other materials previously used for the same purpose. In combination with other materials - milled mullite bricks and quartzite - they achieve progress towards a highly effective solution (obtaining a nonfired refractory material) as compared to the materials existing prior to the claimed invention.

## Claims

1. The cathode assembly of the aluminium reduction cell, comprising a metal shell lined with side blocks sitting on a brick edge, bottom carbon graphite blocks with current conducting bars, and a cathode base of at least one heat insulating and refractory layers made of loose materials, and **characterised in that** at least one refractory layer is made out of the blend of the following major components: porcellanite 23-26 wt%, quartzites 43-46 wt%, and spent mullite bricks from anode baking furnaces 28-32 wt%, and compacted to the apparent density of at least 2,100 kg/m³.

2. The assembly referred to in claim 1, **characterized in that** the mass concentration of porcellanite particles of less than 0.5 mm is 73.83%, the mass concentration of particles of more than 0.5 mm and less than 2 mm is 21.22%, the percentage of particles of more than 2 mm and less than 3 mm is 1.38%, and the mass concentration of particles of more than 3 mm and less than 5 mm is 3.57%.

3. The assembly referred to in claim 1, **characterized in that** the mass concentration of quartzite particles of less than 0.5 mm is 6.01%, the mass concentration of particles of more than 0.5 mm and less than 2 mm is 48.92%, the percentage of the particles of more than 2 mm and less than 3 mm is 8.74%, and the mass concentration of particles of more than 3 mm and less than 5 mm is 36.33%.

4. The assembly referred to in claim 1, **characterized in that** the mass concentration of particles of milled spent mullite bricks of less than 0.5 mm is 55.19%, the mass concentration of particles of more than 0.5 mm and less than 2 mm is 24.75%, the percentage of particles of more than 2 mm and less than 3 mm is 3.99%, and the mass concentration of particles of more than 3 mm and less than 5 mm is 16.07%.

5. The assembly referred to in claim 1, **characterized in that** the blend contains for the most part coarse grains of mullite bricks, to form a hard structural frame, with fine grains of porcellanite together with quartzite filling in the gaps in the frame.

6. The assembly referred to in claim 1, **characterized in that** the ratio between porcellanite, mullite bricks, and quartzites in the blend is 1 : 1 : 2.

7. The base of the cathode assembly of the aluminium reduction cell comprising at least one refractory layer of a loose material, **characterized in that** at least one refractory layer thereof is made out of a blend of major components, including porcellanite, quartzites, and spent mullite bricks from anode baking furnaces, compacted to the apparent density of at least 2,100 kg/m³.

8. The cathode base referred to in claim 7, **characterized in that** the ratio between porcellanite, mullite bricks, and quartzites is 1 : 1 : 2.

9. The cathode base referred to in claim 7, **characterized in that** the porcellanite content in the blend is 23-26 wt%, the quartzite content is 43-46 wt%, and the content of spent mullite bricks from anode baking furnaces is 28-32 wt%.

10. The cathode base referred to in claim 7, **characterized in that** the mass concentration of porcellanite particles of less than 0.5 mm is 73.83%, the mass concentration of more than 0.5 mm and less than 2 mm is 21.22%, the percentage of particles of more than 2 mm and less than 3 mm is 1.38%, and the mass concentration of particles of more than 3 mm and less than 5 mm is 3.57%, and
the mass concentration of quartzite particles of less than 0,5 mm is 6.01%, the mass concentration of particles of more than 0.5 mm and less than 2 mm is 48.92%, the percentage of particles of more than 2 mm and less than 3 mm is 8.74%, and the mass concentration of particles of more than 3 mm and less than 5 mm is 36.33%, and
the mass concentration of particles of milled spent mullite bricks of less than 0.5 mm is 55.19%, the mass concentration of particles of more than 0.5 mm and less than 2 mm equals 24.75%, the percentage of particles of more than 2 mm and less than 3 mm is 3.99%, and the mass concentration of particles of more than 3 mm and less than 5 mm is 16.07%.
